# EUROPÄISCHE PATENTSCHRIFT

(11) **EP 2 712 881 B1**
(45) Veröffentlichungstag und Bekanntmachung des Hinweises auf die Patenterteilung: **20.05.2015**
(21) Anmeldenummer: 12186020.9
(22) Anmeldetag: 26.09.2012
(51) Int. Cl.: C08J 3/12, B01J 3/00, B29B 9/10, B29B 9/16, C08G 63/183

(54) **Verfahren und Vorrichtung zur Direktkristallisation von Polymeren unter Inertgas**
Method and apparatus for directly crystallisation of polymers under inert gas
Procédé et dispositif de cristallisation directe de polymères sous gaz inerte

(43) Veröffentlichungstag der Anmeldung: 02.04.2014
(73) Patentinhaber: Bühler Thermal Processes AG, 9245 Oberbüren (CH)
(72) Erfinder: Christel, Andreas, 9524 Zuzwil (CH); Culbert, Brent Allan, 9500 Wil (CH); Eusebio, Fernando, 8592 Uttwil (CH)
(74) Vertreter: Hepp Wenger Ryffel AG

(56) Entgegenhaltungen:
- EP-A2- 0 864 409
- DE-A1- 1 905 677
- DE-A1-102006 058 642
- US-A- 5 750 644

## Beschreibung

Die vorliegende Erfindung betrifft ein Verfahren und eine Vorrichtung zur Direktkristallisation von Polymeren, insbesondere von Polyestern wie Polyethylenterephthalat (PET), unter Inertgas.

Die Herstellung bestimmter hochmolekularer Polymere, insbesondere von Polykondensaten wie Polyestern, ist über eine Schmelzpolykondensation nicht möglich, da wegen der damit einhergehenden zu hohen thermischen Belastung ein Produktabbau und eine inakzeptable Verunreinigung mit Nebenprodukten auftreten. Aus diesem Grund werden über eine Schmelzpolykondensation Prepolymere mit einem geringeren Molekulargewicht hergestellt. Die Prepolymere werden anschliessend in einer Festphasennachkondensation (SSP) auf das gewünschte Molekulargewicht angehoben. Diese Vorgehensweise ist aus dem Stand der Technik bekannt (z.B. Scheirs/Long (Hrsg.), Modern Polyesters, Wiley 2003, Kapitel 4, S. 143 ff.).

Für die SSP-Reaktion wird das aus der Schmelzpolykondensation erhaltene Prepolymer zu Granulat verarbeitet. Um ein Verkleben des Granulats unter den Bedingungen der SSP-Reaktion zu verhindern, wird das Granulat vor der SSP-Reaktion teilkristallisiert. Auch dies ist aus dem Stand der Technik bekannt (z.B. Scheirs/ Long (Hrsg.), Modern Polyesters, Wiley 2003, Kapitel 4, S. 158-164).

Üblicherweise wird das Prepolymer nach seiner Formung zu Granulat abgekühlt und für die Kristallisation wieder aufgeheizt. Es sind aber aus dem Stand der Technik auch Verfahren bekannt, bei denen das Granulat direkt nach seiner Bildung in heissem Zustand ohne zwischenzeitliche Abkühlung der Kristallisationsstufe zugeführt wird. Derartige Verfahren werden als Direktkristallisation bezeichnet. In der DE 103 49 016 und der DE 10 2004 015 515 sind beispielsweise sogenannte Latentwärmekristallisationsverfahren beschrieben, bei welchem die Kristallisation ausschliesslich unter Ausnutzung der Eigenwärme des Granulats erfolgt. Diese Verfahren haben aber den Nachteil, dass sie die Anforderungen an eine flexibel einstellbare und homogene Austrittsqualität bezüglich Temperatur und Kristallisationsgrad nicht erfüllen können. Weiterhin nachteilig ist, dass sich im Anfangsbereich der Kristallisationszone häufig Agglomerate bilden, die sich nicht immer vollständig auflösen.

Bessere Ergebnisse lassen sich erzielen, wenn die Kristallisation der noch heissen Granulate unter zusätzlichem Erhitzen mittels eines heissen Prozessgases erfolgt.

In der WO 2008/071023 ist ein Verfahren beschrieben, bei welchem noch heisses Granulat in einem Granulattrockner vom Kühlmedium getrennt und anschliessend in einen Kristallisator überführt wird, wo es unter bestimmten Bedingungen behandelt wird. Sowohl Granulattrockner als auch Kristallisator werden hierbei unter Luftatmosphäre betrieben. Verdampftes Kühlmedium kann mit Hilfe von Luft entfernt werden.

Nicht immer kann jedoch unter Luftatmosphäre kristallisiert werden, da es bei den hohen Kristallisationstemperaturen zu oxidativem Abbau kommen kann. Bei bestimmten Materialien beziehungsweise bestimmten Qualitätsanforderungen muss daher unter Inertgasatmosphäre kristallisiert werden.

In der US-3,544,525 ist ein Verfahren beschrieben, bei welchem Polymerschmelze mittels einer Unterwassergranulation in ein Prepolymer-Granulat geformt wird. Das Granulat wird anschliessend in einer Entwässerungseinheit (Granulattrockner) getrocknet und in eine Kristallisationsapparatur überführt, wo es mit heissem Inertgas kristallisiert wird.

Dieses Verfahren weist verschiedene Nachteile auf. Neben einer nicht zufriedenstellenden Kontrolle und Homogenität der Kristallisation kommt es aufgrund der Ausgestaltung des Granulattrockners als geschlossenes System in diesem durch die verdampfende Kühlflüssigkeit (Wasser) zu einem Überdruck. Als Konsequenz wird das Wasser aus dem Granulattrockner in den Kristallisator gedrückt und in den sich anschliessenden SSP-Reaktor eingetragen. Obwohl das Prepolymer in der US-3,544,525 nach Durchlaufen des Granulattrockners als relativ trocken beschrieben wird, liegt im SSP-Reaktor dennoch ein hoher Feuchtigkeitsgehalt vor, welcher vom Prozessgas aufgenommen wird, das den SSP-Reaktor durchströmt. Vor der Rückführung des Prozessgases in den SSP-Reaktor muss dieses in zusätzlichen Einheiten (Kondensator und Trockner) aufwendig vom Wasser befreit werden. Alternativ kann das feuchte Prozessgas entsorgt und durch frisches trockenes Prozessgas ersetzt werden. Diese Variante ist kostspielig und daher nicht zufriedenstellend. Zudem führt der hohe Feuchtigkeitsgehalt im SSP-Reaktor zu einer Abkühlung des Granulats, da das Wasser am Granulat anhaftet und abkondensiert werden muss. Es wird daher im SSP-Reaktor mehr Prozessgas zum Erreichen der gewünschten Reaktionstemperatur benötigt, was ökonomisch nachteilig ist.

Es war die Aufgabe der vorliegenden Erfindung, ein Verfahren und eine Vorrichtung zur Direktkristallisation von Polymer unter I-nertgasbedingungen bereitzustellen, welche nicht die Nachteile aus dem Stand der Technik aufweisen.

Es wurde erfindungsgemäss überraschend gefunden, dass die Nachteile aus dem Stand der Technik überwunden werden können, wenn im Kristallisator ein Druck eingestellt wird, welcher höher ist als der im Granulattrockner vorliegende Druck.

Die vorliegende Erfindung betrifft eine Vorrichtung zur kontinuierlichen Granulation und Kristallisation eines Polymers, umfassend eine Einheit zum Formen eines Polymergranulats und Abkühlen des Granulats in einem flüssigen Kühlmedium, eine nachgeschaltete Einheit zum Trocknen des Granulats, wobei diese Einheit eine Austrittsöffnung zur Abfuhr von Gas, vorzugsweise Luft, umfasst, einen Kristallisator zur Kristallisation des Granulats, wobei der Kristallisator über eine Verbindungsleitung mit der vorgeschalteten Einheit zum Abtrennen des flüssigen Kühlmediums vom Granulat und Trocknen des Granulats verbunden ist und einen Einlass und vorzugsweise einen Auslass zur Zufuhr und Abfuhr von Inertgas umfasst, und der Kristallisator über den Einlass mit einem Inertgastank verbunden ist, wodurch der Druck im Kristallisator gegenüber einem Druck in der Einheit zum Trocknen des Granulats erhöht werden kann.

Erfindungsgemäss bevorzugt umfasst die Vorrichtung zudem eine Steuereinheit zur Einstellung eines Drucks im Kristallisator, wobei der Druck im Kristallisator gegenüber einem ermittelten Druck in der Einheit zum Trocknen des Granulats erhöht werden kann.

Gemäss der vorliegenden Erfindung soll unter einer *"vorgeschalteten"* Einheit eine Einheit verstanden werden, welche im operativen Ablauf der Vorrichtung vor einer nachfolgenden Einheit angeordnet ist und mit dieser direkt verbunden ist beziehungsweise ein ungehinderter Durchtritt des zu behandelnden Materials von der vorgeschalteten Einheit zur nachgeordneten Einheit gewährleistet ist.

Gemäss der vorliegenden Erfindung soll unter einer *"nachgeschalteten"* Einheit eine Einheit verstanden werden, welche im operativen Ablauf der Vorrichtung nach einer zuvor angeordneten Einheit angeordnet ist und mit dieser direkt verbunden ist beziehungsweise ein ungehinderter Durchtritt des zu behandelnden Materials von der zuvor angeordneten Einheit zur nachgeschalteten Einheit gewährleistet ist.

Die vorliegende Erfindung betrifft weiterhin ein Verfahren zur kontinuierlichen Herstellung eines teilkristallinen Polymergranulats, umfassend die Schritte
a) Formen einer Polymerschmelze zu Granulat unter Zugabe eines flüssigen Kühlmediums, und Abkühlen auf eine Temperatur oberhalb der Klebrigkeitstemperatur des Polymers vor oder während oder nach dem Formen;
b) Abtrennen des flüssigen Kühlmediums vom Granulat in einem ersten Behandlungsraum bei einer Temperatur oberhalb der Klebrigkeitstemperatur des Polymers in einer Gasphase, vorzugsweise Luft, wobei abgetrenntes Kühlmedium in die Gasphase übergeht,
c) Kristallisieren des Granulats in einem zweiten Behandlungsraum unter Inertgas, wobei der Druck p2 im zweiten Behandlungsraum so eingestellt wird, dass er oberhalb des im ersten Behandlungsraum vorliegenden Druckes p1 liegt.

Die vorliegende Erfindung ist zur Behandlung von kristallisierbaren Polymeren vorgesehen, wobei Polykondensate bevorzugt sind. Geeignete Polykondensate umfassen kristallisierbare, thermoplastische Polykondensate, wie zum Beispiel Polyamide, Polyester, Polycarbonate, Polyhydroxyalkanoate, Polylaktide oder deren Copolymere, die durch eine Polykondensationsreaktion unter Abspaltung eines niedermolekularen Reaktionsproduktes gewonnen werden. Dabei kann die Polykondensation direkt zwischen den Monomeren erfolgen oder über eine Zwischenstufe, die anschliessend durch Transesterifikation umgesetzt wird, wobei die Transesterifikation wiederum unter Abspaltung eines niedermolekularen Reaktionsproduktes oder durch Ringöffnungspolymerisation erfolgen kann. Im Wesentlichen ist das so gewonnene Polykondensat linear, wobei eine geringe Anzahl an Verzweigungen entstehen kann.

Bei Polyamid handelt es sich dabei um ein Polymer, das durch Polykondensation aus seinen Monomeren, entweder einer Diamin-Komponente und einer Dicarbonsäure-Komponente oder einem bifunktionellen Monomer mit einer Amin- und einer Carbonsäure-Endgruppe, gewonnen wird. Bei Polyester handelt es sich hierbei um ein Polymer, das durch Polykondensation aus seinen Monomeren, einer Diol-Komponente und einer Dicarbonsäure-Komponente, gewonnen wird. Verschiedene, meist lineare oder cyclische Diol-Komponenten kommen zum Einsatz. Ebenso können verschiedene, meist aromatische Dicarbonsäure-Komponenten zum Einsatz kommen. Anstelle der Dicarbonsäure kann auch ihr entsprechender Dimethylester eingesetzt werden.

Typische Beispiele der Polyester sind Polyethylenterephthalat (PET), Polybutylenterephthalat (PBT) und Polyethylennaphthalat (PEN) die entweder als Homopolymer oder als Copolymere zum Einsatz kommen. Erfindungsgemäss beträgt der Comonomergehalt der eingesetzten Polyester weniger als 15%, bevorzugt weniger als 10%.

Das Polyethylenterephthalat wird aus seinen Monomeren, einer Diol-Komponente und einer Dicarbonsäure-Komponente, gewonnen, wobei die Diol-Komponenten als Hauptmonomer aus Ethylenglykol (1,2- Ethandiol) und die Dicarbonsäure-Komponenten als Hauptmonomer aus Terephthalsäure besteht. Als Comonomere kommen weitere lineare, cyclische oder aromatische Diol- und Dicarbonsäureverbindungen in Frage. Typische Comonomere sind Diethylenglykol (DEG), Isophthalsäure (IPA) oder 1,4-Bishydroxymethyl-cyclohexan (CHDM).

Bei Polyhydroxyalkanoaten handelt es sich um Polymere, die durch Polykondensation aus ihren Monomeren mit der allgemeinen Formel HO-CH(R)-(CH₂)ₙ-COOH gewonnen werden, wobei R üblicherweise einen aliphatischen Kohlenwasserstoff mit 1 bis 15 Kohlenstoffatomen darstellt und n = 1 bis 10, üblicherweise 1 bis 3 beträgt. Ein typisches Beispiel ist Polyhydroxybutyrat mit R = CH₃ und n = 1.

Bei den Polylaktiden (bekannt als Polylactic acid, PLA) handelt es sich um Polymere, die direkt unter Wasserabspaltung aus Milchsäure oder durch Ringöffnungspolymerisation aus deren cyclischen Dimeren (Lactiden) gewonnen werden können.

Bei dem Polykondensat kann es sich um ein Neumaterial oder um ein Recyclat handeln. Als Recyclate werden wiederaufbereitete Polymere aus den Herstell- und Verarbeitungsprozessen (post industrial) oder nach dem Konsumentengebrauch gesammelte und wiederaufbereitete Polymere (post consumer) bezeichnet.

Dem Polymer können Additive zugegeben werden. Als Additive eignen sich zum Beispiel Katalysatoren, Farbstoffe und Pigmente, UV-Blocker, Verarbeitungshilfsmittel, Stabilisatoren, Schlagzähmodifikatoren, Treibmittel chemischer und physikalischer Art, Füllstoffe, Nukleierungsmittel, Flammhemmungsmittel, Weichmacher, Barriere- oder mechanische Eigenschaften verbessernde Partikel, verstärkende Körper, wie Kugeln oder Fasern, sowie reaktive Substanzen, wie zum Beispiel Sauerstoffabsorber, Acetaldehydabsorber oder molekulargewichtserhöhende Substanzen.

Der erfindungsgemässen Einheit zum Formen eines Polymergranulats wird eine Polymerschmelze als Ausgangsmaterial zugeführt. Die Herstellung einer Polymerschmelze erfolgt mittels im Stand der Technik bekannter Apparaten oder Reaktoren (z.B. Scheirs/Long (Hrsg.), Modern Polyesters, Wiley 2003, insbesondere S- 31-104). Grundsätzlich kommen Polymerisationsreaktoren in Frage, in denen Polymere in flüssiger Phase hergestellt werden, wie zum Beispiel Rührkessel, Käfigreaktoren oder Scheibenreaktoren, oder aber Apparaturen, in denen zuvor hergestellte Polymere aufgeschmolzen werden, wie zum Beispiel Extruder oder Kneter. Die Polymerschmelzeherstellung kann kontinuierlich oder batchweise erfolgen. Für die weitere Verarbeitung sind aber kontinuierliche Prozesse bevorzugt.

In einer Austrittsvorrichtung, insbesondere einer Düse oder Düsenplatte, werden aus der Polykondensatschmelze einzelne Polykondensatstränge geformt. Zur Herstellung von Granulaten (d.h. Teilchen definierter Form und Grösse) aus den Polykondensatsträngen können die im Stand der Technik bekannten Granulationstechniken, wie Stranggranulation, Wasserringgranulation, Unterwassergranulation oder Kopfgranulation (auch hot face - Granulation) verwendet werden. Dabei werden die Polykondensatstränge, die aus den Schmelzekanälen austreten, verfestigt und in eine Vielzahl an einzelnen Granulaten aufgetrennt, wobei das Auftrennen vor oder nach dem Verfestigen erfolgen kann. Das Auftrennen erfolgt zum Beispiel durch eine selbstständige Tropfenbildung, durch den Einsatz eines flüssigen Schermediums oder durch ein mechanisches Trennen, insbesondere Schneiden. Während eine selbstständige oder eine durch ein Schermedium erzwungene Tropfenbildung am Düsenaustritt erfolgt, kann ein Schneiden sowohl direkt am Düsenaustritt erfolgen oder aber erst nach dem Durchlaufen einer Behandlungsstrecke.

Das Verfestigen der Polykondensatschmelze erfolgt durch Kühlen mit Hilfe eines oder mehrere Kühlfluide, wobei es sich erfindungsgemäss um gasförmige (z.B. Luft, Stickstoff oder CO₂) oder flüssige (z.B. Wasser oder Ethylenglykol) Kühlmedien oder eine Kombination daraus handeln kann. Erfindungsgemäss wird zumindest ein flüssiges Kühlmedium verwendet. Das Polykondensat, insbesondere als Polykondensatstränge oder als Tropfen, kann zum Beispiel vor dem Eintritt in das flüssige Kühlmedium eine Strecke durchfliessen, die ein Prozessgas, insbesondere Luft oder Wassernebel, enthält. Trotz der Verwendung des Begriffs "Wasser" in der Bezeichnung der Granulationseinrichtungen können auch andere flüssige Medien verwendet werden. Das Abkühlen kann erfindungsgemäss vor, während oder nach dem Formen des Materials zu Granulat erfolgen.

Die derart hergestellten Granulate sollen bevorzugterweise eine definierte Granulatform, wie zum Beispiel zylinderförmig, kugelförmig, tropfenförmig, kugelähnlich oder einer Design-Form, wie sie zum Beispiel in EP 0 541 674 vorgeschlagen ist, aufweisen. Die mittlere Granulatgrösse soll zwischen 0.1 mm und 10 mm, bevorzugterweise zwischen 0.5 mm und 3 mm und insbesondere zwischen 0.85 mm und 2.5 mm liegen.

Gemäss der vorliegenden Erfindung wird das hergestellte Granulat einer Direktkristallisation unterzogen, d.h. das Granulat wird nicht derart stark abgekühlt (z.B. auf Raumtemperatur), dass es für eine nachfolgende Kristallisation mit grossem Energieaufwand erhitzt werden muss. Gemäss der vorliegenden Erfindung wird das Granulat auf eine Temperatur abgekühlt, die oberhalb seiner Klebrigkeitstemperatur (Glasübergangstemperatur) liegt. Bei Polyestern beginnt das Granulat oberhalb der Glasübergangstemperatur des Materials zu verkleben, d.h. die Teilchen haften unter Bildung von Agglomeraten aneinander. Die Glasübergangstemperatur von Polyethylenterephthalat liegt beispielsweise bei etwa 75°C.

Bevorzugterweise erfolgt die Abkühlung der Polykondensatgranulate aber auf eine durchschnittliche Temperatur, die innerhalb des Kristallisationstemperaturbereiches des Polykondensates liegt. Dies wird erreicht, indem die Temperatur des Kühlmediums angehoben und/oder die Verweilzeit des Granulats im Kühlmedium entsprechend kurz gewählt wird. Gleichzeitig mit dem Abkühlen können die Polykondensatgranulate zu einem weiteren Prozessschritt gefördert werden.

Der geeignete Kristallisationstemperaturbereich wird ersichtlich, wenn man die Kristallisationshalbwertszeit (t^{1/2}) als Funktion der Temperatur aufzeichnet. Er ist nach oben und unten begrenzt durch die Temperatur, bei der die Kristallisationshalbwertszeit das ungefähr 10-Fache der minimalen Kristallisationshalbwertszeit erreicht. Da sehr kurze Kristallisationshalbwertszeiten nur schwer bestimmbar sind, wird als Minimalwert 1 Minute eingesetzt. Bei Polyethylenterephthalat liegt der Kristallisationstemperaturbereich zwischen 110 und 220 °C.

Die Kristallisationshalbwertszeit t^{½} wird dazu mittels isothermer Kristallisation im DSC bestimmt, wobei t^{½} der Zeit entspricht, die bei der gegebenen Temperatur nach der Induktionszeit benötigt wird, um 50% der erreichbaren Kristallinität zu erreichen.

Im Fall von Polyethylenterephthalat (PET) als bevorzugt zu behandelndem Polymer erfolgt eine Abkühlung des Granulats auf eine Temperatur im Bereich von 100 bis 180 °C, vorzugsweise von 110 bis 160 °C und besonders bevorzugt von 120 bis 150 °C.

Nach dem Abkühlen wird das Kühlmedium von den Granulaten getrennt. Optional erfolgt eine weitere Behandlung (Konditionierung) der Granulate in einem flüssigen Medium, wofür direkt das Kühlmedium oder eine andere Flüssigkeit verwendet werden kann.

Das Trennen der Granulate von einem flüssigen Kühlmedium kann mittels im Stand der Technik bekannter Trennvorrichtungen erfolgen. Dabei kann es sich lediglich um passive Trennvorrichtungen, wie zum Beispiel Gitter oder Roste, handeln, durch die das Kühlmedium, nicht aber das Granulat durchtreten kann. Üblicherweise werden aktive Trennvorrichtungen zumindest für einen Teil der Trennung verwendet, wobei die Trennung zum Beispiel aufgrund einer Gasdurchströmung, einer Zentrifugalkraft oder eines Aufpralls erfolgt. Solche Vorrichtungen sind zum Beispiel als Absaugvorrichtungen, Pralltrockner oder Zentrifugaltrockner bekannt.

Das Granulat wird erfindungsgemäss einer Trocknungsstufe unterzogen, um das Kühlmedium vollständig vom Granulat abzutrennen. Hierfür wird das Granulat aus einer vorstehend beschriebenen Einheit zum Formen des Granulats über eine Verbindungsleitung in eine Einheit zum Trocknen des Granulats überführt. Die Überführung des Granulats in die Trocknungseinheit erfolgt mit einer derartigen Geschwindigkeit, dass es nicht zu einer Abkühlung des Granulats unter dessen Klebrigkeitstemperatur kommt. Die Fliessgeschwindigkeit des Granulats in der Verbindungsleitung kann durch Zufuhr von Luft oder einem anderen geeigneten Gas (vorzugsweise einem Inertgas wie Stickstoff) in die Verbindungsleitung erhöht werden.

Einheiten zum Trocknen eines Granulats (Granulattrockner) sind aus dem Stand der Technik bekannt. Erfindungsgemäss bevorzugt wird ein Reaktor verwendet, in welchem ein erster Behandlungsraum bereitgestellt ist. Innerhalb des Reaktors erfolgen die Abtrennung des Kühlmediums (in der Regel Wasser) und im ersten Behandlungsraum das Trocknen des abgetrennten Granulats durch Verdampfen des Kühlmediums. Für das Verdampfen des Kühlmediums wird an den ersten Behandlungsraum eine Temperatur im Bereich von 100 bis 180°C, vorzugsweise von 110 bis 160 °C und besonders bevorzugt von 120 bis 150 °C angelegt. Das Granulat verweilt im ersten Behandlungsraum vorzugsweise für einen Zeitraum von einer Zehntelsekunde bis zu 10 Sekunden.

Der erfindungsgemässe Granulattrockner weist mindestens eine Einfüllöffnung für die Zufuhr des Granulats in die Einheit auf. Bei der Einfüllöffnung kann es sich zum Beispiel um eine Öffnung im Gehäuse oder um den Austritt aus einem Rohr, das in das Gehäuse geführt wird, handeln. Weiterhin weist der erfindungsgemässe Granulattrockner mindestens eine Austragsöffnung für die Wegfuhr des Granulats aus der Einheit auf. Bei der Austragsöffnung kann es sich zum Beispiel um eine Öffnung im Gehäuse oder um den Eintritt in ein Rohr, das aus dem Gehäuse heraus geführt wird, handeln.

Im ersten Behandlungsraum liegt eine Gasphase vor, welche das verdampfende Kühlmedium aufnimmt. Erfindungsgemäss bevorzugt handelt es sich bei dem Gas um Luft. Es können aber auch andere Gasgemische mit einem niedrigeren Sauerstoffgehalt als Luft verwendet werden. Es muss aber nicht Inertgas eingesetzt werden. Gemäss beispielhaften Ausführungsformen kann der Sauerstoffgehalt im ersten Behandlungsraum mehr als 1 Gew.-%, vorzugsweise mehr als 5 Gew.-% und besonders bevorzugt mehr als 10 Gew.-% betragen. Um oxidativen Abbau des Materials zu vermeiden, sollte aber der Sauerstoffgehalt im ersten Behandlungsraum den Sauerstoffgehalt von Luft (rund 21%) nicht übersteigen.

Die erfindungsgemässe Trocknungseinheit ist im Gegensatz zur entsprechenden Einheit der US-3,544,525 keine abgeschlossene Einheit. Die erfindungsgemässe Trocknungseinheit weist mindestens eine Austrittsöffnung zur Abfuhr von Gas, vorzugsweise Luft, auf. Gemäss einer bevorzugten Ausführungsform der vorliegenden Erfindung mündet die Austrittsöffnung der Trocknungseinheit in eine Gasabfuhrleitung, in welcher ein Ventilator zur Luftzirkulation durch die Trocknungseinheit angeordnet ist.

Die erfindungsgemässe Trocknungseinheit kann weiterhin mindestens eine Eintrittsöffnung zur Einleitung von Gas, vorzugsweise Luft, aufweisen. Die Eintrittsöffnung ist in diesem Fall am entgegen gesetzten Ende des ersten Behandlungsraums zur Austrittsöffnung angeordnet, um ein vollständiges Durchströmen des ersten Behandlungsraums mit Gas zu gewährleisten. Es ist aber auch möglich, dass die Eintrittsöffnung zur Einleitung von Gas nicht in der Trocknungseinheit angeordnet ist, sondern in der nachfolgenden Verbindungseinheit.

Gemäss einer bevorzugten Ausführungsform der vorliegenden Erfindung wird das Gas über einen Ansaugfilter der Eintrittsöffnung zugeführt. In der zur Eintrittsöffnung führenden Gasleitung kann ein Ventilator zur Luftzirkulation durch die Trocknungseinheit angeordnet sein. Dieser Ventilator kann zusätzlich zum Ventilator in der Gasabfuhrleitung vorgesehen sein oder an dessen Stelle treten. Gemäss einer bevorzugten Ausführungsform der vorliegenden Erfindung ist somit nur in der Gaszufuhrleitung ein Ventilator vorgesehen.

Gemäss einer weiteren Ausführungsform der vorliegenden Erfindung können die zur Eintrittsöffnung führende Leitung und die von der Austrittsöffnung abgehende Leitung miteinander untere Ausbildung eines geschlossenen Kreislaufs verbunden sein. Bei dieser Ausführungsform muss das Gas vor Wiedereintritt in den ersten Behandlungsraum aber durch einen Kondensator geführt werden, um das im Gas befindliche verdampfte Kühlmedium abzutrennen.

Die erfindungsgemässe Vorrichtung weist vorzugsweise einen Kühlmedium-Kreislauf auf. Das Kühlmedium wird aus einem Vorratsbehälter (Tank) vorzugsweise über eine Umwälzpumpe und gegebenenfalls einen Wärmetauscher (zum wahlweisen Erhitzen oder Abkühlen des Kühlmediums) in die Formeinheit (Granulationsvorrichtung) geführt. Das in der Trocknungseinheit abgetrennte Kühlmedium kann über eine Rohrleitung zurück in den Vorratsbehälter geführt werden.

Im ersten Behandlungsraum kommt es bei gleichbleibendem Verhältnis von Luftzu- und abfuhr während des Trocknungsvorgangs zu einem Druckanstieg, da flüssiges Kühlmedium in den gasförmigen Zustand übergeht und die Gasphase im ersten Behandlungsraum zunimmt.

Nach dem Abtrennen der Polykondensatgranulate vom flüssigen Kühlmedium erfolgt ein direkter Übertrag in den nachfolgenden zweiten Behandlungsraum zur Kristallisation. Erfindungsgemäss wird dies mit Hilfe einer Verbindungsleitung erreicht, welche zwischen Trocknungseinheit und Kristallisator angeordnet ist und die Austragsöffnung der Trocknungseinheit mit der Einlassöffnung des nachgeschalteten Kristallisators verbindet. Die Verbindungsleitung ist derart ausgestaltet, dass ein ungehinderter Durchtritt des zu behandelnden Materials von der vorgeschalteten Einheit zur nachgeordneten Einheit gewährleistet ist. In der Verbindungsleitung sind daher keine Absperrvorrichtungen vorhanden. Dies hat den Zweck, das Risiko eines Anhaftens der heissen, klebrigen Polymerpartikel in der Verbindungsleitung auszuschliessen. Die Verbindungsleitung kann einen Gaseinlass aufweisen.

In der Verbindungsleitung sollte eine ständige Relativbewegung zwischen den einzelnen Granulaten gewährleistet sein, um ein Verkleben des Granulats zu verhindern. Die Relativbewegung lässt sich zum Beispiel erreichen durch eine hohe Fliessgeschwindigkeit in der Verbindungsleitung (grösser als 0.3 m/min, insbesondere grösser als 1 m/min), durch eine Umströmung mit einem Fördergas, durch mechanische Bewegung, zum Beispiel mittels Rührwerk oder Förderschnecke, oder durch Erzeugung einer Schwingung oder Vibration.

Um im Fall einer Störung des Kristallisators ein aufwendiges und kostspieliges Entsorgen von Material zu vermeiden, kann die erfindungsgemässe Verbindungsleitung wie in der WO 2008/071278 beschrieben mit einem Zwischenspeicher verbunden sein, in welchen das Material durch eine Steuerungsvorrichtung im Störungsfall geleitet und dort unter Bedingungen (insbesondere Absenkung der Granulat-Temperatur unterhalb seines Glasübergangspunktes) gelagert wird, bei denen eine Agglomeration des Granulats nicht auftritt. Auf den entsprechenden Inhalt der WO 2008/071278 wird hier ausdrücklich Bezug genommen.

Beim Eintritt in den Kristallisator ist das zu behandelnde Granulat in der Regel im Wesentlichen amorph, d.h. es weist einen Kristallisationsgrad von weniger als 10%, vorzugsweise weniger als 5% auf. Erfindungsgemäss bevorzugt weist das Granulat im Fall von Polyethylenterephthalat (PET) vor Eintritt in den Kristallisator einen IV-Wert von 0.6 bis 0.8 dl/g, insbesondere 0.65 bis 0.75 dl/g auf. Der IV-Wert gibt die intrinsische Viskosität eines Polymers an und ist ein Mass für dessen Molekulargewicht. Der IV-Wert und seine Bestimmung sind aus dem Stand der Technik bekannt.

Erfindungsgemäss durchfliessen die Polykondensatgranulate den zweiten Behandlungsraum zur Kristallisation im Wesentlichen von oben nach unten, während der zweite Behandlungsraum vorzugsweise von unten nach oben von einem Inertgas durchströmt wird. Die Bewegung der Polymerteilchen im Kristallisator erfolgt durch mechanische Bewegung oder vorzugsweise durch den Strom aus Inertgas. Der erfindungsgemässe Kristallisator kann als Fliessbett oder Sprudelbett im Gegenstrom oder Kreuzstrom betrieben werden.

Der zweite Behandlungsraum zur Kristallisation ist von einem Gehäuse umgeben. Der horizontale Querschnitt des Behandlungsraumes kann eine beliebige Form aufweisen, ist bevorzugterweise aber rund oder rechteckig. Der Behandlungsraum ist im Wesentlichen vertikal angeordnet, so dass das Granulat die Vorrichtung von oben nach unten durchfliessen kann. Wichtig ist dabei, dass ein gleichmässiger Produktfluss erreicht werden kann. Der zweite Behandlungsraum ist seitlich durch einen Mantel begrenzt. Die Mantelwand kann dabei aus zylindrischen, konischen oder aus einer Kombination aus konischen und zylindrischen Segmenten bestehen, wodurch sich die Gasgeschwindigkeitsverteilung über die Höhe der Vorrichtung beeinflussen lässt. Eine Aufweitung im Deckenbereich erlaubt dabei eine Reduktion der Gasgeschwindigkeit, was den Austrag von Granulat verhindert. Eine Verengung im Deckenbereich erlaubt eine Erhöhung der Gasgeschwindigkeit, was zu einer stärkeren Verwirbelung führt, wodurch sich allfällige Verklebungen verhindern lassen.

Eine besondere Ausführungsform der vorliegenden Erfindung sieht einen wenigstens annähernd rotationssymmetrischen Gehäusemantel vor, was fertigungstechnische Vorteile sowie Vorteile für einen regelmässigen Produktfluss ergibt.

Im Innern des zweiten Behandlungsraumes kann ein Verdrängungskörper angeordnet sein, der nicht vom Granulat durchflössen wird und somit den zweiten Behandlungsraum verkleinert. Solche Verdrängungskörper können zum Beispiel zur Durchführung von Inertgas, zur Anpassung der freien Querschnittsfläche oder zur Verbesserung des Granulatflusses eingesetzt werden.

Zumindest eine Einfüllöffnung mündet in den Deckenbereich des zweiten Behandlungsraumes und ermöglicht das Einführen des zu behandelnden Granulats in den zweiten Behandlungsraum. Bei der Einfüllöffnung kann es sich zum Beispiel um eine Öffnung im Gehäuse oder um den Austritt aus einem Rohr, das in das Gehäuse geführt wird, handeln. Die Einfüllöffnung kann in mehrere Segmente unterteilt sein, was eine Verteilung der Granulate im Behandlungsraum erlaubt.

Zumindest eine Austragsöffnung mündet in den unteren Teil des zweiten Behandlungsraumes, durch die behandeltes Granulat aus dem Behandlungsraum ausgetragen werden kann. Bei der Austragsöffnung kann es sich zum Beispiel um eine Öffnung im Gehäuse oder um den Eintritt in ein Rohr, das aus dem Gehäuse heraus geführt wird, handeln. Üblicherweise wird das Granulat durch einen konischen Bereich der Austragsöffnung zugeführt. Der Winkel des Auslaufkonus beträgt zur Horizontalen bevorzugterweise 50 - 80°, wenn das Granulat im Austragskonus nicht fluidisiert oder vibriert wird, und 15 - 60°, insbesondere 30 - 50°, wenn das Granulat im Austragskonus fluidisiert oder vibriert wird. Alternativ kann das Granulat auch mittels einer mechanischen Austragsvorrichtung, wie zum Beispiel einer Schnecke, der Austragsöffnung zugeführt werden. Unterhalb der Austragsöffnung kann sich ein Sperrelement, wie zum Beispiel eine Zellradschleuse, eine horizontal angeordneten Austragswalze oder ein automatischer Schieber befinden, mit dessen Hilfe der Granulatabfluss aus dem Behandlungsraum geregelt wird. Als Regelgrösse kann dabei zum Beispiel die Füllhöhe des Granulates im Behandlungsraum oder das Gewicht der Granulate in der Vorrichtung dienen.

Im Bodenbereich des Behandlungsraumes befindet sich vorzugsweise zumindest eine Zufuhreinrichtung für ein Inertgas. Die Zufuhreinrichtung weist zumindest eine Eintrittsöffnung auf, durch die Inertgas in den zweiten Behandlungsraum strömt.

Die Zuführeinrichtung für ein Inertgas kann Vorrichtungen, wie zum Beispiel nach unten offene Kegel oder Dachreihen sowie Leitungen oder Bleche mit Austrittsbohrungen, umfassen, solange eine ausreichend gleichmässige Verteilung des Inertgases erfolgt. Eine besondere Ausführung sieht vor, dass der Behandlungsraum nach unten durch eine zumindest teilweise gasdurchlässige Absperreinrichtung, insbesondere ein Lochblech mit einer Vielzahl an Eintrittsöffnungen, begrenzt wird, die von Inertgas zumindest stellenweise, nicht aber von den Granulaten durchströmt werden kann. Dazu sind die Öffnungen kleiner als der Durchmesser der Granulate. Die Durchlassfläche weist bevorzugterweise zwischen 1% und 30% auf. Bevorzugt sind Öffnungen zwischen 20 und 90%, insbesondere zwischen 30 und 80% des Durchmessers der Granulate. Die Anzahl, Grosse und Anordnung der Öffnungen kann dabei gleichmässig oder ungleichmässig sein. Die Absperreinrichtung ist konisch oder horizontal angeordnet.

Unterhalb der Absperreinrichtung kann sich ein Verteilerraum befinden, durch den Inertgas zur Absperrvorrichtung geführt wird. In diesen Verteilerraum mündet zumindest eine Zufuhröffnung für Inertgas. Weiterhin können Vorrichtungen zur Verteilung des Inertgases, wie Staubleche, Ventile oder Klappen, wie auch getrennte Kanäle zur individuellen Inertgaszufuhr angeordnet sein. Alternativ kann der Behandlungsraum nach unten durch eine nicht gasdurchlässige Absperreinrichtung begrenzt sein. In diesem Fall kann es sich bei der zumindest einen Zufuhreinrichtung für ein Inertgas, um eine Öffnung im Gehäuse, um den Austritt aus einem Rohr oder mehreren Rohren, die in das Gehäuse geführt werden, oder um ein einzelnes Dach oder eine Dachreihe, die entweder mit Löchern versehen oder nach unten offen sind, handeln. Dabei kann ein anfälliger Verdrängungskörper zur Gaszufuhr verwendet werden.

Eine besondere Ausführung der vorliegenden Erfindung sieht vor, dass zusätzlich zur zumindest einen Zuführeinrichtung für Inertgas im Bodenbereich des zweiten Behandlungsraumes zumindest eine weitere Zufuhreinrichtung für Inertgas in den zweiten Behandlungsraum mündet, wodurch sich eine mehrstufige Wärmezufuhr sowie ein mehrstufiges Gasgeschwindigkeitsprofil erreichen lässt.

Im Deckenbereich des zweiten Behandlungsraumes befindet sich vorzugsweise zumindest eine Wegführeinrichtung für das Inertgas. Bei der Wegführeinrichtung kann es sich zum Beispiel um eine Öffnung im Gehäuse oder um den Eintritt in ein Rohr, das aus dem Gehäuse heraus geführt wird, handeln. Die Wegführeinrichtung kann sich dabei im Mantel oder der Decke des Behandlungsraumes befinden. Gemäss einer alternativen Ausführungsform der Erfindung ist keine derartige Wegführeinrichtung vorgesehen. In diesem Fall verlässt das Inertgas den zweiten Behandlungsraum durch die Verbindungsleitung vom ersten zum zweiten Behandlungsraum. In oder unterhalb der Wegführeinrichtung können sich Vorrichtungen befinden, die den Durchtritt von Inertgas erlauben, den Durchtritt von Granulaten aber behindern. Dies kann zum Beispiel durch einen gebogenen oder umgelenkten Durchflusskanal oder mit Hilfe von ablenkenden Einbauten, wie zum Beispiel einem ZickZack-Abscheider, erfolgen.

Das Granulat wird im zweiten Behandlungsraum durch Energiezufuhr von aussen, bevorzugt mit Hilfe des heissen Inertgases erhitzt, vorzugsweise um mindestens 20°C. Bevorzugterweise wird das Inertgas also mit einer Temperatur in den zweiten Behandlungsraum geführt, die über der mittleren Granulattemperatur der Polykondensatgranulate beim Eintritt in den zweiten Behandlungsraum liegt, woraus sich der Vorteil ergibt, dass sich die Polykondensatgranulate auf eine konstante und definierte Austrittstemperatur einstellen lassen. Das Granulat wird erfindungsgemäss bevorzugt im Fall von Polyethylenterephthalat (PET) im zweiten Behandlungsraum (d.h. im Kristallisator) auf eine Temperatur im Bereich von 140 bis 220°C erhitzt.

Erfindungsgemäss bevorzugt beträgt die Verweilzeit des Materials 1 bis 30 Kristallisationshalbwertszeiten. Im Fall eines schnell kristallisierenden Polymers wie Polyethylenterephthalat (PET) mit einem Comonomergehalt von weniger als 5% beträgt die Verweilzeit somit 1 bis 30 Minuten. Langsam kristallisierende Polymere müssen entsprechend länger im zweiten Behandlungsraum verweilen, bis der gewünschte Anstieg des Kristallisationsgrades erreicht ist.

Erfindungsgemäss erfolgt die Kristallisation im Kristallisator im Unterschied zu herkömmlichen Verfahren mit einem Inertgas als Prozessgas. Vorzugsweise wird Stickstoff verwendet. Erfindungsgemäss soll der Sauerstoffgehalt des Gases im zweiten Behandlungsraum weniger als 1 Gew.-%, vorzugsweise weniger als 0,5 Gew.-% und besonders bevorzugt weniger als 0,1 Gew.-% betragen, um eine oxidative Beschädigung des Materials unter den Bedingungen der Kristallisation zu verringern beziehungsweise auszuschliessen.

Da Inertgase wie Stickstoff teuer sind, wird erfindungsgemäss bevorzugt das im Kristallisator eingesetzte Gas zumindest teilweise in einem Kreislaufsystem geführt, wobei jeweils eine geringe Menge an Austauschgas zu- und weggeführt werden kann. Zwischen der Wegführeinrichtung und Zufuhreinrichtung für das Inertgas besteht gemäss dieser bevorzugten Ausführungsform ein geschlossener Kreislauf aus Rohrleitungen.

Im Kreislauf können sich weitere Einheiten, wie zum Beispiel Verdichtungseinrichtungen (z. B. Ventilatoren, Gebläse oder Kompressoren), Wärmetauscher (z.B. Erhitzer), Absperrvorrichtungen z.B. ein Ventil oder Hahn) oder Reinigungseinrichtungen (z. B. Filter, Zyklone, Wäscher oder katalytische Verbrennungseinrichtungen), befinden. Da ein Grossteil der Verdichtungsenergie als Wärme in den Gasstrom übergeht, kann die erhöhte Prozessgastemperatur auch mit wenig zusätzlicher Erhitzerleistung aufrecht erhalten werden. Verändert sich jedoch die Eintrittstemperatur der Polykondensatgranulate, so kann dies mittels der zusätzlichen Erhitzerleistung ausgeglichen werden. Erfindungsgemäss bevorzugt sind in dem geschlossenen Kreislaufsystem zusätzliche Einheiten enthalten, ausgewählt aus der Gruppe bestehend aus einem Ventilator, einem Wärmetauscher wie Erhitzer, einer Absperrvorrichtung, einen Kondensator oder einer Kombination dieser Einheiten.

Gemäss der vorliegenden Erfindung ist der Kristallisator mit einem Inertgastank verbunden. Gemäss einer bevorzugten Ausführungsform der vorliegenden Erfindung ist eine Zuführleitung vorhanden, mit welcher Inertgas aus dem Inertgastank in das Kreislaufsystem aus Rohrleitungen oder direkt in den Kristallisator eingeführt werden kann. Vorzugsweise ist in dieser Zuführleitung eine Dosiereinheit, beispielsweise ein Regelventil, angeordnet, mit welcher die Zufuhr von Inertgas kontrolliert werden kann.

Gemäss der vorliegenden Erfindung wird der Druck p2 im zweiten Behandlungsraum so eingestellt, dass er oberhalb des im ersten Behandlungsraum vorliegenden Druckes p1 liegt. Dadurch wird ein Übergehen von Kühlmedium aus dem ersten Behandlungsraum im Trockner in den zweiten Behandlungsraum im Kristallisator verhindert. Aufgrund des höheren Drucks im zweiten Behandlungsraum geht hierbei Inertgas aus dem zweiten Behandlungsraum in den ersten Behandlungsraum über. Es hat sich jedoch gezeigt, dass es erfindungsgemäss ausreichend ist, wenn p1 < p2 < p1 +100 mbar, vorzugsweise p1 < p2 < p1 +50 mbar gilt, d.h. der Druck im zweiten Behandlungsraum weniger als 100 mbar, vorzugsweise sogar weniger als 50 mbar über dem Druck im ersten Behandlungsraum liegt. Mit anderen Worten genügt überraschend ein leicht höherer Druck im zweiten Behandlungsraum gegenüber dem ersten Behandlungsraum zum Erreichen des erfindungsgemässen Zieles. Bei diesen Druckverhältnissen geht nur ein geringer Anteil an Inertgas durch Übertritt in den ersten Behandlungsraum verloren. Dieser kleine Nachteil wird durch die sich aus der im Kristallisator vorliegenden geringen Feuchtigkeit und den sich daraus ergebenden apparativen und verfahrenstechnischen Vorteilen (geringere Menge an Inertgas im Kristallisator erforderlich, Inertgas muss nur wenig beziehungsweise überhaupt nicht getrocknet werden) mehr als ausgeglichen.

Die erfindungsgemässe Vorrichtung umfasst gemäss einer bevorzugten Ausführungsform Sensoren, mit deren Hilfe der Druck im ersten und zweiten Behandlungsraum bestimmt werden kann. Erfindungsgemäss können herkömmliche Drucksensoren eingesetzt werden. Die Sensoren sind mit einer Steuereinheit verbunden, mit welcher die von den Sensoren ermittelten Daten ausgewertet werden können. Bei der erfindungsgemässen Steuereinheit handelt es sich üblicherweise um einen Computer mit erforderlichen Bauteilen wie einer zentralen Rechnereinheit (CPU) und Speicher.

Die erfindungsgemässe Steuereinheit ist vorzugsweise mit der in der Zuführleitung befindlichen Dosiereinheit verbunden und regelt durch entsprechende Kontrolle der Dosiereinheit die Menge an Prozessgas, welche dem Kreislaufsystem des Kristallisators zugeführt wird. Ermittelt die Steuereinheit beispielsweise aus den von den Sensoren übermittelten Druckwerten einen Druckanstieg im ersten Behandlungsraum, wird durch Öffnen der Dosiereinheit eine derartige Menge an Prozessgas in das Kreislaufsystem geführt, dass sich der gewünschte höhere Druck im zweiten Behandlungsraum einstellt. Analog wird bei einem Druckabfall im ersten Behandlungsraum Prozessgas durch Öffnen einer in einer separaten Ablassleitung befindlichen, ebenfalls mit der Steuereinheit verbundenen und durch diese geregelte Dosiereinheit aus dem Kreislaufsystem abgelassen, um einen zu hohen Druck im zweiten Behandlungsraum mit einhergehendem zu grossem Übergang von Prozessgas vom zweiten in den ersten Behandlungsraum zu vermeiden. Alternativ kann die gewünschte Druckdifferenz zwischen erstem und zweitem Behandlungsraum auch dadurch eingestellt werden, dass durch Öffnen entsprechender Dosiereinrichtungen die Luftzufuhr in den ersten Behandlungsraum beziehungsweise die Luftabfuhr aus dem ersten Behandlungsraum erhöht oder erniedrigt wird.

Ist die zur Einstellung des erfindungsgemässen Überdrucks im zweiten Behandlungsraum erforderliche Menge an Inertgas bekannt oder ermittelt, kann die erfindungsgemässe Vorrichtung auch ohne Steuereinheit durch Einleiten der erforderlichen Menge an Inertgas in den Kristallisator betrieben werden. Es empfiehlt sich aber auch hier zumindest eine Kontrolle der Druckverhältnisse im ersten und zweiten Behandlungsraum mit Hilfe von Drucksensoren. Gemäss einer weiteren alternativen Ausführungsform ist kein Gasauslass aus dem zweiten Behandlungsraum vorgesehen. In diesem Fall kommt es bei Einleitung von Inertgas in den zweiten Behandlungsraum zwangsläufig zu einem erhöhten Druck im zweiten Behandlungsraum gegenüber dem ersten Behandlungsraum. Dies führt ab einem bestimmten Druckgefälle zu einem Übergang des Inertgas von den zweiten in den ersten Behandlungsraum, wodurch erfindungsgemäss ebenfalls das Eintragen von Wasser in den zweiten Behandlungsraum verhindert wird.

Durch die vorliegende Erfindung wird ein Energieverlust im Kristallisator durch eine etwaige Verdampfung von Kühlmedium vom Granulat sehr klein gehalten. Gemäss der vorliegenden Erfindung kann daher das Granulat mit einer geringeren Menge an Prozessgas effizient auf eine Temperatur im Bereich von 180 bis 200°C erhitzt werden, was bereits der in einer sich gegebenenfalls anschliessenden Nachbehandlungsstufe anzuwendenden Temperatur weitgehend entspricht. Zusätzliche Energie wird durch freigesetzte Kristallisationswärme verfügbar. Erfindungsgemäss ist daher ein weiteres Erhitzen des Granulats in einer sich an die Kristallisation anschliessende Nachbehandlungsstufe überhaupt nicht oder nur in geringem Mass erforderlich.

Beim Austritt aus dem zweiten Behandlungsraum weist das Granulat vorzugsweise im Fall von Polyethylenterephthalat (PET) einen Kristallisationsgrad zwischen 25 und 45%, insbesondere zwischen 30 und 40% auf.

Gemäss der vorliegenden Erfindung kann das nach der Kristallisation erhaltene Material einer weiteren thermischen Behandlungsstufe zugeführt werden, welche vorzugsweise aus der Gruppe bestehend aus einer Devolatisierungsstufe, vorzugsweise Dealdehydisierungsstufe, und einer Festphasen-Nachkondensation (SSP) ausgewählt ist. Diese thermische Behandlungsstufe wird in einem dritten Behandlungsraum durchgeführt, welcher sich vorzugsweise in einem separaten Reaktor befindet.

Sowohl die Devolatisierung, vorzugsweise Dealdehydisierung, als auch die SSP-Reaktion sind dem Fachmann bekannt und müssen an dieser Stelle nicht näher erläutert werden. Erfindungsgemäss bevorzugt wird diese thermische Behandlung in einem dritten Behandlungsraum in einer Gasphase aus Inertgas durchgeführt, wobei flüchtige Komponenten aus dem Polymer während der Behandlung verdampfen und in die Gasphase übergehen. Vorzugsweise wird Stickstoff als Inertgas verwendet. Erfindungsgemäss soll der Sauerstoffgehalt des Gases im dritten Behandlungsraum weniger als 0,1 Gew.-%, vorzugsweise weniger als 0,05 Gew.-% und besonders bevorzugt weniger als 0,02 Gew.-% betragen, um eine oxidative Beschädigung des Materials unter den Bedingungen der Kristallisation zu verringern beziehungsweise auszuschliessen.

Aufgrund der hohen Temperatur des in den dritten Behandlungsraum eintretenden Polymers ist es nicht erforderlich, sehr heisses Prozessgas in den dritten Behandlungsraum einzuleiten. Aufgrund frei werdender Kristallisationswärme wird erfindungsgemäss im dritten Behandlungsraum im Fall von Polyethylenterephthalat (PET) in der Regel ein Temperaturanstieg von 3 bis 15 °C, vorzugsweise von 5 bis 15°C und besonders bevorzugt von 7 bis 15°C beobachtet. Gemäss der vorliegenden Erfindung kann daher in bestimmten Fällen in den dritten Behandlungsraum ein Prozessgas eingeleitet werden, dessen Temperatur unterhalb der Temperatur der im dritten Behandlungsraum vorliegenden Polymerteilchen liegt. Durch die vorliegende Erfindung kann eine sich anschliessende thermische Behandlungsstufe daher energieeffizient durchgeführt werden.

Analog zum zweiten Behandlungsraum wird vorzugsweise auch im dritten Behandlungsraum das Inertgas im Gegenstrom zum Strom der Polymerpartikel geführt. Es können prinzipiell die gleichen Reaktoren in der thermischen Behandlung eingesetzt werden, welche vorstehend für die Kristallisation beschrieben wurden, oder andere hierfür herkömmlich eingesetzte Reaktoren. Beispielsweise sei ein herkömmlicher Schachtreaktor erwähnt.

Die kristallisierten Polymerteilchen werden aus dem Kristallisator auf bekannte Art in den dritten Behandlungsraum überführt. Beispielsweise können die Teilchen den Kristallisator durch eine Absperrvorrichtung (Schleuse) mittels einer pneumatischen Förderung in den dritten Behandlungsraum überführt werden. Hierbei kann je nach Geschwindigkeit der Förderung im Fall von Polyethylenterephthalat (PET) eine Abkühlung der Polymerpartikel um zwischen 2 und 15°C, vorzugsweise zwischen 3 und 15°C und besonders bevorzugt zwischen 5 und 15°C erfolgen. Falls erforderlich kann ein zusätzliches Erhitzen der Teilchen vor Eintritt in den dritten Behandlungsraum auf bekannte Art durchgeführt werden.

Erfindungsgemäss kann die Dealdehydisierung von beispielsweise Polyethylenterephthalat im dritten Behandlungsraum bei einer Temperatur von 140 bis 190°C erfolgen. Es ist hierbei beispielsweise ein Temperaturanstieg im dritten Behandlungsraum von 3 bis 15°C zu beobachten.
Erfindungsgemäss kann die SSP-Reaktion von beispielsweise Polyethylenterephthalat im dritten Behandlungsraum bei einer Temperatur von 180 bis 240°C, vorzugsweise 180 bis 225°C erfolgen. Es ist hierbei beispielsweise ein Temperaturanstieg im dritten Behandlungsraum von 3 bis 15°C zu beobachten.

Herkömmliche Anlagen zur Herstellung hochmolekularer und reiner Polymerprodukte können unter Berücksichtigung der Konzepte der der vorliegenden Erfindung auf einfache Weise modifiziert und optimiert werden. Herkömmliche Herstellungsverfahren für Polymere über eine Direktkristallisation mit anschliessender thermischer Nachbehandlung werden üblicherweise so durchgeführt, dass zumindest die Stufen der Trocknung und Direktkristallisation des Granulats in einer Luftatmosphäre durchgeführt werden. Im Fall einer Dealdehydisierung als thermische Behandlung sind aus dem Stand der Technik sowohl Verfahren unter Luftatmosphäre als auch Verfahren unter Inertgasatmosphäre bekannt. Beispielhaft wird auf die Dokumente WO 2005/092949 A1, WO 2006/060930 A1 und WO 2007/022994 A1 verwiesen.

Wie vorstehend ausgeführt weisen derartige Verfahren aus dem Stand der Technik insbesondere folgende Nachteile auf: Die Temperaturstabilität der Latentwärmekristallisation (Direktkristallisation) ist ungenügend. In einer Luftatmosphäre können wegen des Risikos einer oxidativen Beschädigung des Materials nur tiefere Temperaturen gefahren werden. Dies hat zur Folge, dass die Dealdehydisierung nicht in ausreichendem Mass durchgeführt werden kann. Weiterhin entstehen beim Kristallisieren und thermischen Nachbehandeln in Luftatmosphäre zusätzliche unerwünschte volatile Spaltprodukte. Schliesslich ist durch den Feuchtigkeitseintrag in den Kristallisator und Reaktor zur thermischen Nachbehandlung die Energiebilanz herkömmlicher Verfahren mit Nachteilen behaftet, wie vorstehend beschrieben.
Gemäss der vorliegenden Erfindung können diese Nachteile auf einfache Weise überwunden werden, wenn die Direktkristallisation in einer Inertgasatmosphäre bei einem Druck durchgeführt wird, der gegenüber dem in der vorgängigen Trocknungsstufe vorliegenden Druck leicht erhöht ist.

Bei herkömmlichen Anlagen kann eine solche Verfahrensführung dadurch realisiert werden, dass der in der Anlage bereits vorhandene Kristallisator auf einen Betrieb mit Inertgas umgerüstet und zusätzlich die Anlage mit einer erfindungsgemässen Steuereinheit zur korrekten Einstellung eines Drucks im Kristallisator ausgestattet wird.

Alternativ kann zusätzlich zu einem in der Anlage befindlichen Kristallisator ein zweiter Kristallisator eingebaut werden, der für den Betrieb mit Inertgas ausgerüstet ist, und eine erfindungsgemässe Steuereinheit zur korrekten Einstellung eines Drucks im Kristallisator eingebaut werden. Für einen Betrieb mit Inertgas sollte der Kristallisator im Bedarfsfall mit einem vorstehend beschriebenen geschlossenen Kreislaufsystem ausgestattet werden, um das teure Inertgas recyceln und in den Kristallisator zurückführen zu können. Vorzugsweise sollte die Anlage im Bedarfsfall auch mit einer Einheit zur Zuführung externer Wärme in den Kristallisator, beispielsweise mit einem Wärmetauscher zum Erhitzen des Inertgases, ausgestattet werden.

Im Fall einer herkömmlichen Anlage, bei welcher eine Dealdehydisierung als thermische Nachbehandlung in einer Luftatmosphäre durchgeführt wird, umfasst die erfindungsgemässe Umrüstung der Anlage vorzugsweise auch die Modifizierung des Reaktors zur thermischen Nachbehandlung dergestalt, dass dieser Reaktor mit Inertgas betrieben wird. Für einen Betrieb mit Inertgas sollte der Reaktor im Bedarfsfall mit einem vorstehend beschriebenen geschlossenen Kreislaufsystem ausgestattet werden, um das teure Inertgas recyceln und in den Reaktor zurückführen zu können. Vorzugsweise sollte die Anlage im Bedarfsfall auch mit einer Einheit zur Zuführung externer Wärme in den Reaktor, beispielsweise mit einem Wärmetauscher zum Erhitzen des Inertgases, ausgestattet werden.

Die vorliegende Erfindung betrifft somit auch ein Verfahren zur Umrüstung einer Anlage zur Granulation und Kristallisation eines Polymers mit einer Einheit zum Trocknen des Granulats und einem Kristallisator, wobei die Kristallisation des Polymers in der Anlage unter Luft erfolgt, umfassend die Schritte
a) der Modifizierung des in der Anlage vorhandenen Kristallisators auf einen Betrieb mit Inertgas oder wahlweise der Bereitstellung eines zusätzlichen Kristallisators, der für den Betrieb mit Inertgas ausgerüstet ist, und
b) der zusätzlichen Ausstattung der Anlage mit einer Steuereinheit zur Einstellung eines Drucks im Kristallisator, mit welcher der Druck im Kristallisator gegenüber einem ermittelten Druck in der Einheit zum Trocknen des Granulats erhöht werden kann.

Die vorliegende Erfindung wird nachstehend anhand einer nicht einschränkenden Zeichnung näher erläutert. Es zeigt:

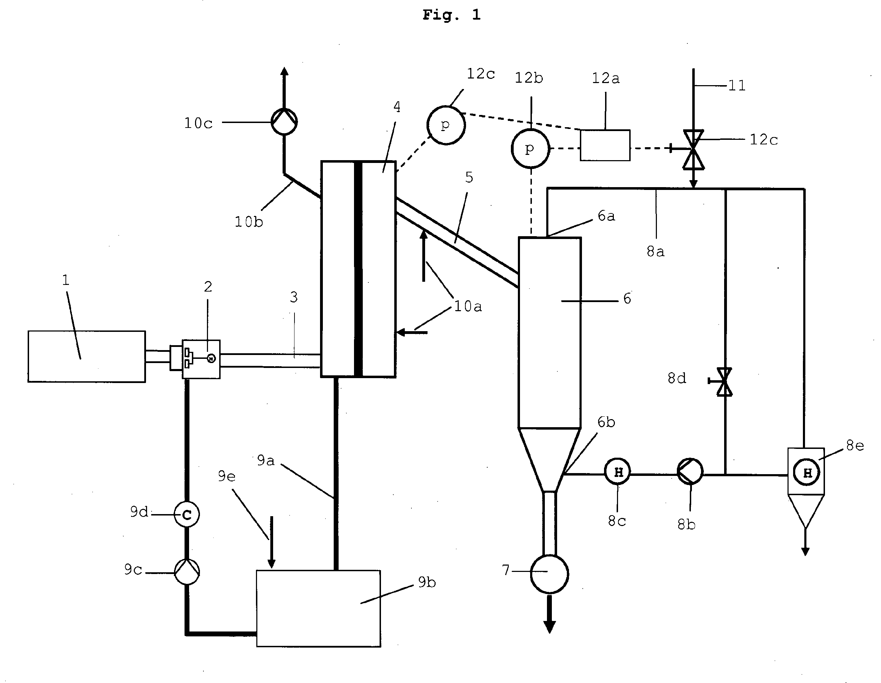

- Fig. 1: eine schematische Darstellung einer brvorzugten Ausführungsform einer Vorrichtung gemäss der vorliegenden Erfindung.

Die Vorrichtung gemäss Fig. 1 weist einen Reaktor 1 zur Herstellung einer Polymerschmelze auf. Es kann sich hierbei um einen Reaktor handeln, in welchem eine Schmelzpolymerisation durchgeführt und somit ein Prepolymer aus den Monomeren hergestellt wird. Wahlweise kann es sich bei dem Reaktor 1 auch um eine Vorrichtung zum Aufschmelzen eines festen Produkts, beispielsweise eines Prepolymer handeln. Beispielhaft kann der Reaktor 1 in diesem Fall ein Extruder sein.

Das geschmolzene Material wird in eine Granulationsvorrichtung 2 überführt. In der Granulationsvorrichtung 2 wird auf bekannte Weise ein Granulat aus dem geschmolzenen Material hergestellt. Beispielsweise kann es sich um einen Unterwassergranulator (wie in Fig. 1 gezeigt) oder um einen Unterwasserstranggranulator handeln. Die Granulierung erfolgt in diesem Fall unter Wasser. Die erhaltenen Granulatpartikel werden im Granulator 2 gleichzeitig abgekühlt. Wie vorstehend ausgeführt darf die Abkühlung aber nicht so stark ausfallen, dass die Granulatpartikel unterhalb ihres Glasüberganspunktes (d.h. unterhalb ihrer Klebrigkeitstemperatur) abgekühlt werden. Dies kann durch den Einsatz von erwärmtem Wasser oder durch eine verringerte Verweilzeit der Granulatpartikel im Granulator 2 erreicht werden. Das Granulat sollte im Fall von Polyethylenterephthalat (PET) auf eine Temperatur von 100 bis 180°C gekühlt werden.

Das Granulat wird über eine Verbindungsleitung 3 direkt in die Einheit zum Trocknen des Granulats (Granulattrockner) 4 überführt. Zur Vermeidung einer zu starken Abkühlung des Granulats sollte dieses so schnell wie möglich durch die Verbindungsleitung 3 geführt werden. Vorzugsweise kann die Fliessgeschwindigkeit in der Verbindungsleitung 3 durch Einleitung eines Gasstroms (vorzugsweise Luft) erhöht werden.

In der Einheit zum Trocknen des Granulats (Granulattrockner) 4 wird das Granulat vom flüssigen Kühlmedium (Wasser) abgetrennt und getrocknet. Das abgetrennte Kühlmedium wird über eine Rohrleitung 9a zurück in den Vorratsbehälter (Tank) 9b für das Kühlmedium geführt. Der Vorratsbehälter 9b weist einen Einlass 9e zur Zuführung von Kühlmedium auf. Vom Vorratsbehälter 9b wird das Kühlmedium mit Hilfe einer Umwälzvorrichtung (Pumpe) 9c in die Granulationsvorrichtung 2 überführt. Hierbei durchläuft das Kühlmedium vorzugsweise einen Wärmetauscher 9d. Im Wärmetauscher 9d kann das Kühlmedium nach Bedarf erwärmt oder abgekühlt werden. Insbesondere aus dem Granulattrockner 4 zurückgeführtes Kühlmedium kann aufgrund des Kontakts mit heissem Granulat eine zu hohe Temperatur aufweisen und muss vor dem Eintritt in die Granulationsvorrichtung 2 gekühlt werden.

Die Trocknung des Granulats im ersten Behandlungsraum in der Einheit 4 erfolgt neben einer mechanischen Trocknungsvorrichtung mit Hilfe von Luft oder einer im wesentlichen Luft umfassenden Gasatmosphäre bei einer Temperatur von 100 bis 180°C. In der Vorrichtung gemäss Fig. 1 wird die Luft durch einen Lufteinlass 10a in den Granulattrockner 4 geführt. Der Lufteinlass 10a kann sich im Gehäuse des Granulattrockners 4 oder in der Verbindungsleitung 5 oder an beiden Orten befinden. Optional kann in der Lufteinlassleitung 10a ein (nicht gezeigter) Ansaugfilter angeordnet sein. Die Luft verlässt den Granulattrockner 4 durch den Luftauslass 10b. In der Vorrichtung gemäss Fig. 1 ist in der Luftauslassleitung 10b ein Ventilator 10c zur Zirkulation der Luft durch den Granulattrockner 4 angeordnet. Der Ventilator könnte jedoch alternativ auch in der Lufteinlassleitung 10a angeordnet sein. Weiterhin könnten Lufteinlass 10a und Luftauslass 10b miteinander unter Bildung eines Kreislaufsystems verbunden sein. In diesem Kreislaufsystem ist dann ein Kondensator bereitzustellen.

Das Granulat wird aus dem Trockner 4 über eine Verbindungsleitung 5 direkt in einen Kristallisator 6 überführt. Zur Vermeidung des Anhaftens und der Agglomeration von Granulatpartikeln ist die Verbindungsleitung 5 ohne Absperrvorrichtungen ausgestaltet. Das Granulat kann ungehindert vom Trockner 4 in den Kristallisator 6 übergehen.

Im Kristallisator 6 wird das im Wesentlichen amorphe Granulat zumindest teilkristallisiert. Innerhalb des Kristallisators 6 werden die Granulatpartikel durch einen durch den Kristallisator 6 geleiteten Gasstrom in Bewegung gehalten. Innerhalb des Kristallisators 6 können die Bedingungen eines Fliessbetts oder Sprudelbetts vorliegen. Alternativ könnte im Kristallisator 6 auch eine Vorrichtung zur mechanischen Bewegung der Partikel bereitgestellt werden.

Die Kristallisation der Partikel erfolgt im Fall von Polyethylenterephthalat (PET) bei einer Temperatur von 140 bis 200°C unter einer im wesentlichen Stickstoff umfassenden Atmosphäre. Das kristallisierte Granulat verlässt den Kristallisator über eine Austragsvorrichtung 7, beispielsweise einer Absperrvorrichtung wie einer Zellradschleuse. Die Partikel können einer anschliessenden thermischen Behandlung wie einer Dealdehydisierung oder SSP-Reaktion zugeführt werden. Wahlweise können die Partikel auch einer Kühlstufe zugeführt werden.

Das im Kristallisator 6 verwendete Inertgas wird durch ein geschlossenes Kreislaufsystem aus Rohrleitungen 8a geführt. Das Inertgas tritt in den Kristallisator 6 durch einen Einlass 6a ein und verlässt den Kristallisator 6 durch den Auslass 6b. Im Kreislaufsystem des Inertgases befindet sich ein Ventilator 8b zur Zirkulation des Gases. Vor dem Einlass 6a ist ein Wärmetauscher 8c bereitgestellt, um das Gas vor dem Eintritt in den Kristallisator 6 auf die gewünschte Temperatur zu bringen. Vorzugsweise wird das Gas im Wärmetauscher 8c erhitzt.

Im Kreislaufsystem gemäss Fig. 1 ist weiterhin eine Absperrvorrichtung 8d (beispielsweise ein Ventil) vorgesehen, um einen Teil des Gases in einen sekundären Kreislauf zu führen.

Weiterhin ist im Kreislaufsystem gemäss Fig. 1 ein Kondensator 8e angeordnet, um Kühlmedium aus dem Gas zu entfernen, welches vom Gas während des Durchgangs durch den Kristallisator 6 aufgenommen wurde. Da erfindungsgemäss wenig Kühlmedium in den Kristallisator 6 übergeht, kann der Kondensator 8e vergleichsweise klein dimensioniert sein.

Die Vorrichtung gemäss Fig. 1 weist eine Zuführleitung 11 für Inertgas auf, über welche Inertgas aus einem nicht gezeigten Inertgastank in das vorstehend beschriebene Kreislaufsystem eingespeist oder aus dem Kreislaufsystem abgelassen werden kann. Die Dosierung des Gases erfolgt mit Hilfe einer Dosiereinheit 12c, beispielsweise einem Regelventil. Die Dosiereinheit 12c wird mit Hilfe einer Steuereinheit 12a betrieben. Die Steuereinheit 12a empfängt von den Drucksensoren 12b und 12c Werte der im Granulattrockner 4 und dem Kristallisator 6 vorliegenden Drücke und bestimmt anhand dieser Werte den Bedarf für eine Öffnung oder ein Schliessen der Dosiereinheit 12c.

Die vorliegende erfindungsgemässe Vorrichtung kann vorteilhaft zur kontinuierlichen Granulation und Kristallisation eines Polymers, insbesondere eines Polykondensats, vorzugsweise eines Polyesters wie Polyethylenterephthalat verwendet werden.

## Patentansprüche

1. Vorrichtung zur kontinuierlichen Granulation und Kristallisation eines Polymers, umfassend
eine Einheit (2) zum Formen eines Polymergranulats und Abkühlen des Granulats in einem flüssigen Kühlmedium, eine nachgeschaltete Einheit (4) zum Trocknen des Granulats, wobei diese Einheit (4) eine Austrittsöffnung (10b) zur Abfuhr von Gas, umfasst,
ein Kristallisator (6) zur Kristallisation des Granulats, wobei der Kristallisator (6) über eine Verbindungsleitung (5) mit der vorgeschalteten Einheit (4) zum Abtrennen des flüssigen Kühlmediums vom Granulat und Trocknen des Granulats verbunden ist, und einen Einlass (6b) zur Zufuhr von Inertgas umfasst,
**dadurch gekennzeichnet, dass**
der Kristallisator (6) über den Einlass (6b) mit einem Inertgastank verbunden ist, wodurch der Druck im Kristallisator (6) gegenüber einem Druck in der Einheit (4) zum Trocknen des Granulats erhöht werden kann.

2. Vorrichtung nach Anspruch 1, **dadurch gekennzeichnet, dass** die Vorrichtung eine Steuereinheit (12a) zur Einstellung eines Drucks im Kristallisator (6) umfasst, wobei der Druck im Kristallisator (6) gegenüber einem ermittelten Druck in der Einheit (4) zum Trocknen des Granulats erhöht werden kann.

3. Vorrichtung nach Anspruch 1 oder 2, **dadurch gekennzeichnet, dass** die Einheit (2) zum Formen eines Polymergranulats mit einem vorgeschalteten Reaktor (1) zur Herstellung einer Polymerschmelze verbunden ist.

4. Vorrichtung nach einem der Ansprüche 1 bis 3, **dadurch gekennzeichnet, dass** der Einlass (6b) und Auslass (6a) des Kristallisators (6) zur Zufuhr und Abfuhr von Inertgas über Rohrleitungen (8a) unter Ausbildung eines geschlossenen Kreislaufsystems miteinander verbunden sind.

5. Vorrichtung nach einem der Ansprüche 2 bis 4, **dadurch gekennzeichnet, dass** die Steuereinheit (12a) mit einer Dosiereinheit (12c) verbunden ist, welche in einer Zuführleitung (11) für Inertgas in den Kristallisator (6) oder das geschlossene Kreislaufsystem aus Rohrleitungen (8a) angeordnet ist.

6. Vorrichtung nach einem der Ansprüche 2 bis 5, **dadurch gekennzeichnet, dass** die Steuereinheit (12a) mit einem Sensor (12b) zur Bestimmung des Drucks im Kristallisator und mit einem Sensor (12c) zur Bestimmung des Drucks in der Einheit (4) zum Trocknen des Granulats verbunden ist.

7. Vorrichtung nach einem der Ansprüche 1 bis 6, **dadurch gekennzeichnet, dass** die Einheit (4) zum Trocknen des Granulats und/oder die Verbindungsleitung (5) einen Gaseinlass (10a) für die Zufuhr von Luft aufweist.

8. Verfahren zur kontinuierlichen Herstellung eines teilkristallinen Polymergranulats, umfassend die Schritte
a) Formen einer Polymerschmelze zu Granulat unter Zugabe eines flüssigen Kühlmediums, und Abkühlen auf eine Temperatur oberhalb der Klebrigkeitstemperatur des Polymers vor oder während oder nach dem Formen;
b) Abtrennen des flüssigen Kühlmediums vom Granulat in einem ersten Behandlungsraum bei einer Temperatur oberhalb der Klebrigkeitstemperatur des Polymers in einer Gasphase, wobei abgetrenntes Kühlmedium in die Gasphase übergeht,
c) Kristallisieren des Granulats in einem nachgeschalteten zweiten Behandlungsraum unter Inertgas,
**dadurch gekennzeichnet, dass**
der Druck p2 im zweiten Behandlungsraum so eingestellt wird, dass er oberhalb des im ersten Behandlungsraum vorliegenden Druckes p1 liegt.

9. Verfahren nach Anspruch 8, **dadurch gekennzeichnet, dass** p1 < p2 < p1 +100 mbar gilt.

10. Verfahren nach Anspruch 8 oder 9, **dadurch gekennzeichnet, dass** der Sauerstoffgehalt im ersten Behandlungsraum mehr als 1 Gew.-% beträgt.

11. Verfahren nach einem der Ansprüche 8 bis 10, **dadurch gekennzeichnet, dass** der Sauerstoffgehalt im zweiten Behandlungsraum weniger als 1 Gew.-% beträgt.

12. Verfahren nach einem der Ansprüche 8 bis 11, **dadurch gekennzeichnet, dass** sich an den Schritt c) ein Schritt d) einer thermischen Behandlung des kristallisierten Granulats in einem dritten Behandlungsraum anschliesst.

13. Verfahren nach Anspruch 12, **dadurch gekennzeichnet, dass** es sich bei der thermischen Behandlung um eine Dealdehydisierung oder um eine Festphasen-Nachkondensation handelt.

14. Verwendung einer Vorrichtung gemäss einem der Ansprüche 1 bis 7 zur kontinuierlichen Granulation und Kristallisation eines Polymers.

15. Verfahren zur Umrüstung einer Anlage zur Granulation und Kristallisation eines Polymers mit einer Einheit zum Trocknen des Granulats und einem Kristallisator, wobei die Kristallisation des Polymers in der Anlage unter Luft erfolgt, umfassend die Schritte
a) der Modifizierung des in der Anlage vorhandenen Kristallisators auf einen Betrieb mit Inertgas oder wahlweise der Bereitstellung eines zusätzlichen Kristallisators, der für den Betrieb mit Inertgas ausgerüstet ist und
b) der zusätzlichen Ausstattung der Anlage mit einer Steuereinheit zur Einstellung eines Drucks im Kristallisator, mit welcher der Druck im Kristallisator gegenüber einem ermittelten Druck in der Einheit zum Trocknen des Granulats erhöht werden kann.

## Claims

1. Apparatus for continuous pelletization and crystallization of a polymer, comprising a unit (2) for forming a polymer pellet material and cooling the pellet material in a liquid cooling medium,
an after-connected unit (4) for drying the pellet material, wherein this unit (4) comprises an exit opening (10b) for exporting gas,
a crystallizer (6) for crystallizing the pellet material, wherein the crystallizer (6) communicates via a connection line (5) with the pre-connected unit (4) for separating the liquid cooling medium from the pellet material and drying the pellet material, and comprises an inlet (6b) for importing inert gas,
**characterized in that**
the crystallizer (6) communicates via the inlet (6b) with an inert gas tank, whereby the pressure in the crystallizer (6) can be increased relative to a pressure in the unit (4) for drying the pellet material.

2. Apparatus according to Claim 1, **characterized in that** the apparatus comprises a control unit (12a) for setting a pressure in the crystallizer (6), wherein the pressure in the crystallizer (6) can be increased relative to an ascertained pressure in the unit (4) for drying the pellet material.

3. Apparatus according to Claim 1 or 2, **characterized in that** the unit (2) for forming a polymer pellet material communicates with a pre-connected reactor (1) for producing a polymer melt.

4. Apparatus according to any of Claims 1 to 3, **characterized in that** the inlet (6b) and outlet (6a) of the crystallizer (6) for importing and exporting inert gas communicate with each other via pipework lines (8a) to form a closed-loop circuit system.

5. Apparatus according to any of Claims 2 to 4, **characterized in that** the control unit (12a) communicates with a metering unit (12c) which is disposed in a feed line (11) for inert gas into the crystallizer (6) or the closed-loop circuit system of pipework lines (8a).

6. Apparatus according to any of Claims 2 to 5, **characterized in that** the control unit (12a) communicates with a sensor (12b) for determining the pressure in the crystallizer and with a sensor (12c) for determining the pressure in the unit (4) for drying the pellet material.

7. Apparatus according to any of Claims 1 to 6, **characterized in that** the unit (4) for drying the pellet material and/or the connection line (5) have a gas inlet (10a) for the importation of air.

8. Process for continuous production of partly crystalline polymer pellet material, comprising the steps of
a) forming a polymer melt into pellet material by adding a liquid cooling medium and cooling to a temperature above the stick point temperature of the polymer before or during or after forming;
b) separating the liquid cooling medium from the pellet material in a first treatment space at a temperature above the stick point temperature of the polymer in a gas phase, wherein cooling medium separated off transitions into the gas phase,
c) crystallizing the pellet material in an after-connected second treatment space under an inert gas,
**characterized in that**
the pressure p2 in the second treatment space is set to be above the pressure p1 in the first treatment space.

9. Process according to Claim 8, **characterized in that** p1 < p2 < p1 +100 mbar.

10. Process according to Claim 8 or 9, **characterized in that** the oxygen content of the first treatment space is more than 1% by weight.

11. Process according to any of Claims 8 to 10, **characterized in that** the oxygen content of the second treatment space is less than 1% by weight.

12. Process according to any of Claims 8 to 11, **characterized in that** step c) is adjoiningly followed by a step d) of thermal treatment of the crystallized pellet material in a third treatment space.

13. Process according to Claim 12, **characterized in that** the thermal treatment comprises a dealdehydization or a solid-state post-condensation.

14. Use of apparatus according to any of Claims 1 to 7 for continuous pelletization and crystallization of a polymer.

15. Process for retrofitting a plant for pelletization and crystallization of a polymer with a unit for drying the pellet material and a crystallizer, wherein the crystallization of the polymer in the plant takes place under air, comprising the steps of
a) modifying the existing crystallizer in the plant for operation with an inert gas or alternatively providing an additional crystallizer which is equipped for operation with an inert gas, and
b) additionally endowing the plant with a control unit for setting a pressure in the crystallizer, which control unit can be used to increase the pressure in the crystallizer relative to an ascertained pressure in the unit for drying the pellet material.

## Revendications

1. Dispositif pour la granulation et la cristallisation continues d'un polymère, comprenant une unité (2) destinée à la mise en forme d'un granulé de polymère et au refroidissement du granulé dans un milieu liquide de refroidissement,
une unité (4) raccordée en aval, destinée au séchage du granulé, cette unité (4) comportant un orifice de sortie (10b) pour l'évacuation de gaz,
un cristalliseur (6) destiné à la cristallisation du granulé, le cristalliseur (6) étant relié par un conduit de raccordement (5) à l'unité (4) raccordée en amont, pour la séparation du milieu liquide de refroidissement d'avec le granulé et le séchage du granulé, et comprenant une entrée (6b) destinée à l'introduction de gaz inerte,
**caractérisé en ce que**
le cristalliseur (6) est relié par l'entrée (6b) à un réservoir de gaz inerte, de sorte que la pression dans le cristalliseur (6) peut être augmentée par rapport à une pression dans l'unité (4) destinée au séchage du granulé.

2. Dispositif selon la revendication 1, **caractérisé en ce que** le dispositif comprend une unité de régulation (12a) destinée à l'ajustement d'une pression dans le cristalliseur (6), la pression dans le cristalliseur (6) pouvant être augmentée par rapport à une pression déterminée dans l'unité (4) destinée au séchage du granulé.

3. Dispositif selon la revendication 1 ou 2, **caractérisé en ce que** l'unité (2) destinée à la mise en forme d'un granulé de polymère est reliée à un réacteur (1) raccordé en amont, destiné à la préparation d'une masse fondue de polymère.

4. Dispositif selon l'une quelconque des revendications 1 à 3, **caractérisé en ce que** l'entrée (6b) et la sortie (6a) du cristalliseur (6) destinées à l'introduction et à l'évacuation de gaz inerte par des conduits tubulaires (8a) sont reliées entre elles avec formation d'un système en circuit fermé.

5. Dispositif selon l'une quelconque des revendications 2 à 4, **caractérisé en ce que** l'unité de régulation (12a) est reliée à une unité doseuse (12c) qui est placée dans un conduit d'introduction (11) de gaz inerte dans le cristalliseur (6) ou le système en circuit fermé constitué des conduits tubulaires (8a).

6. Dispositif selon l'une quelconque des revendications 2 à 5, **caractérisé en ce que** l'unité de régulation (12a) est reliée à un capteur (12b) destiné à la détermination de la pression dans le cristalliseur et à un capteur (12c) destiné à la détermination de la pression dans l'unité (4) destinée au séchage du granulé.

7. Dispositif selon l'une quelconque des revendications 1 à 6, **caractérisé en ce que** l'unité (4) destinée au séchage du granulé et/ou le conduit de raccordement (5) comporte(nt) une entrée de gaz (10a) pour l'introduction d'air.

8. Procédé pour la production continue d'un granulée de polymère partiellement cristallin, comprenant les étapes
a) mise en forme d'une masse fondue de polymère en granulé avec addition d'un milieu liquide de refroidissement, et refroidissement jusqu'à une température supérieure à la température de pégosité du polymère avant ou pendant ou après la mise en forme ;
b) séparation du milieu liquide de refroidissement d'avec le granulé dans un premier espace de traitement à une température supérieure à la température de pégosité du polymère dans une phase gazeuse, le milieu de refroidissement séparé passant dans la phase gazeuse,
c) cristallisation du granulé dans un deuxième espace de traitement raccordé en aval, sous gaz inerte,
**caractérisé en ce que**
dans le deuxième espace de traitement on ajuste la pression p2 de manière qu'elle soit supérieure à la pression p1 régnant dans le premier espace de traitement.

9. Procédé selon la revendication 8, **caractérisé en ce que**
l'on a p1 < p2 < p1 + 100 mbars.

10. Procédé selon la revendication 8 ou 9, **caractérisé en ce que** la teneur en oxygène du premier espace de traitement est supérieure à 1 % en poids.

11. Procédé selon l'une quelconque des revendications 8 à 10, **caractérisé en ce que** la teneur en oxygène du deuxième espace de traitement est inférieure à 1 % en poids.

12. Procédé selon l'une quelconque des revendications 8 à 11, **caractérisé en ce qu'**à l'étape c) fait suite une étape d) d'un traitement thermique du granulé cristallisé, dans un troisième espace de traitement.

13. Procédé selon la revendication 12, **caractérisé en ce que** pour ce qui est du traitement thermique il s'agit d'une désaldéhydisation ou d'une post-condensation en phase solide.

14. Utilisation d'un dispositif selon l'une quelconque des revendications 1 à 7, pour la granulation et la cristallisation continues d'un polymère.

15. Procédé pour l'adaptation d'une installation à la granulation et la cristallisation d'un polymère avec une unité destinée au séchage du granulé et un cristalliseur, la cristallisation du polymère s'effectuant à l'air dans l'installation, comprenant les étapes
a) de la modification du cristalliseur présent dans l'installation pour un fonctionnement avec un gaz inerte ou au choix de la disposition d'un cristalliseur supplémentaire qui est équipé pour le fonctionnement avec un gaz inerte et
b) l'équipement supplémentaire de l'installation avec une unité de régulation destinée à l'ajustement d'une pression dans le cristalliseur, avec laquelle on peut augmenter la pression dans le cristalliseur par rapport à une pression déterminée dans l'unité destinée au séchage du granulé.
